(19) Europäisches Patentamt
European Patent Office
Office européen des brevets

(11) EP 3 959 284 B1

(12) # EUROPEAN PATENT SPECIFICATION

(45) Date of publication and mention of the grant of the patent:
**29.03.2023 Bulletin 2023/13**

(21) Application number: **20720447.0**

(22) Date of filing: **23.04.2020**

(51) International Patent Classification (IPC):
***C09K 5/10*** *(2006.01)* ***C10M 169/04*** *(2006.01)*

(52) Cooperative Patent Classification (CPC):
(C-Sets available)
**C09K 5/10; C10M 169/04;** C10M 2201/061; C10M 2201/062; C10M 2201/065; C10M 2211/0206; C10M 2211/0425; C10N 2020/02; C10N 2020/06; C10N 2030/02; C10N 2040/04; C10N 2040/08; C10N 2040/14; C10N 2040/25; C10N 2050/015; (Cont.)

(86) International application number:
**PCT/EP2020/061300**

(87) International publication number:
**WO 2020/216824 (29.10.2020 Gazette 2020/44)**

(54) **LIQUID DISPERSION WITH ENHANCED THERMAL CONDUCTIVITY CONTAINING INORGANIC PARTICLES**

FLÜSSIGE DISPERSION MIT VERBESSERTER WÄRMELEITFÄHIGKEIT MIT ANORGANISCHEN PARTIKELN

DISPERSION DE LIQUIDE AVEC UNE MEILLEURE CONDUCTIVITÉ THERMIQUE CONTENANT DES PARTICULES INORGANIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2019 EP 19170752**

(43) Date of publication of application:
**02.03.2022 Bulletin 2022/09**

(73) Proprietor: **Evonik Operations GmbH**
**45128 Essen (DE)**

(72) Inventors:
- **LIU, Li-Chung**
  **Taichung City, 404 (TW)**
- **BRANDL, Paul**
  **Taipei, 10462 (TW)**

(74) Representative: **Evonik Patent Association**
**c/o Evonik Industries AG**
**IP Management**
**Bau 1042A/PB 15**
**Paul-Baumann-Straße 1**
**45772 Marl (DE)**

(56) References cited:
**GB-A- 2 557 739** **US-A1- 2010 187 469**
**US-B1- 8 834 739**

- **REDHWAN A A M ET AL: "Development of nanorefrigerants for various types of refrigerant based: A comprehensive review on performance", INTERNATIONAL COMMUNICATIONS IN HEAT AND MASS TRANSFER, PERGAMON, NEW YORK, NY, US, vol. 76, 21 June 2016 (2016-06-21), pages 285-293, XP029638258, ISSN: 0735-1933, DOI: 10.1016/J.ICHEATMASSTRANSFER.2016.06.007 cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **LUKAS ZEININGER ET AL: "Manufacturing Nanoparticles with Orthogonally Adjustable Dispersibility in Hydrocarbons, Fluorocarbons, and Water", CHEMISTRY OPEN, vol. 7, no. 4, 5 March 2018 (2018-03-05), pages 282-287, XP055628060, ISSN: 2191-1363, DOI: 10.1002/open.201800011 cited in the application**
- **DATABASE MEDLINE [Online] US NATIONAL LIBRARY OF MEDICINE (NLM), BETHESDA, MD, US; April 2018 (2018-04), ZEININGER LUKAS ET AL: "Manufacturing Nanoparticles with Orthogonally Adjustable Dispersibility in Hydrocarbons, Fluorocarbons, and Water.", Database accession no. NLM29657914 & ZEININGER LUKAS ET AL: "Manufacturing Nanoparticles with Orthogonally Adjustable Dispersibility in Hydrocarbons, Fluorocarbons, and Water.", CHEMISTRYOPEN 04 2018, vol. 7, no. 4, April 2018 (2018-04), pages 282-287, ISSN: 2191-1363**

(52) Cooperative Patent Classification (CPC): (Cont.)
C10N 2050/10; C10N 2070/00

C-Sets
C10M 2201/061, C10N 2010/04;
C10M 2201/062, C10N 2010/04;
C10M 2201/065, C10N 2010/12

## Description

The invention relates to liquid dispersion containing inorganic particle and liquid fluorinated compound, a process for preparation thereof and the use of such dispersion for increasing thermal conductivity of oil lubricants or heat transfer fluids.

Hydrocarbon and silicone fluids, e.g., oils, can provide electrical isolation between a stator and rotor and also power leads in an electric motor. Additionally, oils provide lubrication for engines and motors to extend lifetime and prevent failure. Motor oils lubricate surfaces in relative motion and close contact to one another, such as for example, bearings and other metal surfaces, to improve motor efficiency and motor run life. Additionally, oils can be useful for carrying away heat that is generated within the motor, thereby reducing the operating temperature.

Even for electrical devices without moving parts, heat transfer from static components and their electrical isolation are important issues, particularly in high voltage or high current applications. Additional equipment is sometimes needed to aid the cooling of these devices. New materials for electrical insulation and thermal conduction having suitable viscosities are required.

One possible way to increase thermal conductivity of organic mixtures like oils is to add highly thermally conductive particles such as AIN, BN or others to such mixtures.

CN 102924924 A discloses a paste heat-conductive silicone grease, containing 100 parts of methyl silicon oil and 400-1000 parts of thermally conductive filler treated with 40-200 parts of a coupling agent. The thermally conductive filler may be selected from alumina, AIN, BN, SiC and other materials. The coupling agent is preferably a silane like HMDS or methyl trimethoxysilane. The paste described in CN 102924924 A possesses very high viscosity.

CN108440968A discloses heat-conductive mixtures comprising 5-30 parts of e.g. aluminium nitride (AIN) particles surface treated with a silane, 100-150 parts of vinyl-terminated dimethyl silicone oil, 20-60 parts of a hydrogen-based silicon oil.

Liquid low molecular weight polymers of haloolefins, particularly those containing a high proportion of fluorine are known to be flame resistant and to have superior chemical and thermal stability in contrast to hydrocarbon oils. Therefore, fluorine-based lubricants are widely used for lubrication of various kinds of machineries such as automobiles, electric equipment, construction machines, industrial machines and the parts constituting these machines. Thus, US 2975220 describes liquid low molecular weight polymers prepared by polymerization of vinylidene fluoride, suitable as lubricants, hydraulic fluids and the like.

WO 0175955 discloses cleaning compositions based on non-flammable and chemically and thermally stable fluorinated hydrocarbon or ether solvents.

L. Zeininger et al. describe in Chemistry Open 2018, 7, 282 -287 preparation of nanoparticles of $TiO_2$ and $Fe_3O_4$ surface treated with amides or esters having fluorinated hydrocarbon substituents and dispersions of such surface treated particles in perfluoro(methylcyclohexane). No other than $TiO_2$ or $Fe_3O_4$ inorganic particles are described in this paper. Additionally, this paper does not relate to any increase of thermal conductivity of such dispersions or their use as lubricants or in thermal management.

GB2557759 discloses that various surface untreated inorganic nanoparticles, such as boron carbide, boron nitride, graphite, silicon, aluminium nitride, silicon carbide, aluminium oxide, silicon dioxide etc. can be dispersed in base fluids to improve heat transfer properties of these base fluid, such as fluorinated ones (HFE 7000).

US2010187469 discloses heat transfer compositions comprising liquid fluorinated ether and surface untreated metal oxide particles such as $Al_2O_3$.

A.A.M. Redhwan et al. in international communications in heat and mass transfer, Pergamon, New York, vol. 76 (2016), pages 285-293, discloses dispersions of surface untreated nanoparticles, such as $Al_2O_3$ in hydrofluorocarbon (HFC) and hydrochlorofluorocarbon (HCFC) refrigerants.

Thus, many surface untreated inorganic particles can be used for improving heat transfer properties of fluorinated fluids. However, the compatibility of such particles with the fluid is often limited. As a result, the inorganic particles often tend to agglomerate, leading to larger particles and undesired increased viscosity of the fluid or even precipitation of such particles.

The problem addressed by the present invention is that of providing chemically and thermally stable liquid systems with good heat transferring properties suitable for use in oil lubricants and heat transfer fluids, e.g. for car battery systems. Such systems should be capable of establishing a homogeneous temperature profile in these fluids. Particularly, the invention relates to the problem of providing chemically and thermally stable, preferably inflammable liquid systems with a relatively low viscosity, containing relatively high content of high thermal conductive fillers, thereby the term "stable" refers to the adversity of such systems to e.g. precipitation or viscosity increase during the use or storage of such systems. To achieve such relatively low viscosity, thermal conductive fillers should be fine dispersed, i.e. have relatively small average particle size.

The invention provides liquid dispersion containing inorganic particle selected from the group consisting of $Al_2O_3$, AlN, $Si_3N_4$, SiC, $WS_2$, and mixtures thereof and at least one liquid fluorinated compound, wherein the inorganic

particle is surface treated with a surface treatment agent selected from the group consisting of organosilanes, silazanes, acyclic or cyclic polysiloxanes and mixtures thereof.

An indispensable part of the present invention is the presence of a liquid fluorinated compound.

Liquid fluorinated compound

The term "fluorinated compound" in the context of the present invention refers to an organic compound, which contains at least one fluorine atom.

Fluorinated compound referred to in the present invention are liquid at 25 °C and 1 atm. Such liquid fluorinated compound may include hydrofluoroethers (HFEs), hydrofluorocarbons (HFCs), hydrohalofluoroethers (HHFEs) and hydrochlorofluorocarbons (HCFCs) and mixtures thereof.

The liquid fluorinated compounds preferably comprise nonionic, partially fluorinated hydrocarbons that may be linear, branched, or cyclic, and optionally may contain one or more additional catenary heteroatoms, such as nitrogen or oxygen.

The liquid fluorinated compound may be selected from the group consisting of partially-fluorinated alkanes, amines, ethers, and aromatic compounds. The liquid fluorinated compound is preferably nonfunctional, i. e. lacking functional groups that are polymerizable, reactive toward acids, bases, oxidizing agents, reducing agents or nucleophiles.

Preferably, the number of fluorine atoms in the liquid fluorinated compound exceeds the number of hydrogen atoms in this compound.

The liquid fluorinated compound referred to in this invention is preferably non-flammable, which is defined herein as having a flash point of greater than about 60 °C when tested according to ASTM D3278-89.

To be non-flammable, the relationship between the number of fluorine, hydrogen, and carbon atoms can preferably be related in that the number of fluorine atoms is equal to or exceeds the sum of the numbers of hydrogen atoms and carbon-carbon bonds:

$$\text{number of F atoms} \geq \text{number of H atoms} + \text{number of C-C bonds}$$

It is preferred that the liquid fluorinated compound is partially or incompletely fluorinated, i.e. contains at least one aliphatic or aromatic hydrogen atom in the molecule. Such compounds generally are thermally and chemically stable. The liquid fluorinated compound used in the present invention typically contains from 3 to 20 carbon atoms and may optionally contain one or more catenary heteroatoms, such as divalent oxygen or trivalent nitrogen atoms. Useful liquid fluorinated compounds include cyclic and non-cyclic fluorinated alkanes, amines, ethers, and any mixture thereof.

Preferably, the number of fluorine atoms is equal to or exceeds the sum of the number of combined hydrogen atoms and carbon-carbon bonds. The fluorinated compound optionally may contain one or more chlorine atoms.

One class of liquid fluorinated compounds suitable for the liquid dispersion of the present invention is hydrofluorocarbons (HFCs), i. e. compounds having only carbon, hydrogen and fluorine, and optionally catenary divalent oxygen and/or trivalent nitrogen. Such compounds are nonionic, may be linear or branched, cyclic or acyclic. Such compounds are of the formula $C_nH_mF_{2n+2-m}$ (I), where n is from about 3 to 20 inclusive, m is from 1 to 41, and where one or more non-adjacent-$CF_2$-groups may be replaced with catenary oxygen or trivalent nitrogen atoms. Preferably the number of fluorine atoms is equal to or greater than the number of hydrogen atoms, and more preferably the number of fluorine atoms is equal to or exceeds the sum of the combined number of hydrogen atoms and carbon-carbon bonds of fluorine atoms.

Preferably used are hydrofluorocarbons having a 3- to 16-carbon backbone. The carbon backbone can be linear, branched, cyclic, or a combination of these. Useful HFCs include compounds having more than approximately 5 molar percent fluorine substitution, or less than about 95 molar percent fluorine substitution, based on the total number of hydrogen and fluorine atoms bonded to carbon, but having essentially no substitution with other atoms (e. g., chlorine). Useful HFCs can be selected from compounds of the following general formula: $C_nH_mF_{2n+2-m}$ (I),
wherein n is at least 3, and m is at least one. Representative compounds of this type include $CF_3CH_2CF_2H$, $CF_2HCF_2CH_2F$, $CH_2FCF_2CFH_2$, $CF_2HCH_2CF_2H$, $CF_2HCFHCF_2H$, $CF_3CFHCF_3$, $CF_3CH_2CF_3$, $CHF_2(CF_2)_2CF_2H$, $CF_3CF_2CH_2CH_2F$, $CF_3CH_2CF_2CH_2F$, $CH_3CHFCF_2CF_3$, $CF_3CH_2CH_2CF_3$, $CH_2FCF_2CF_2CH_2F$, $CF_3CH_2CF_2CH_3$, $CHF_2CH(CF_3)CF_3$, $CHF(CF_3)CF_2CF_3$, $CF_3CH_2CHFCF_2CF_3$, $CF_3CHFCH_2CF_2CF_3$ $CF_3CH_2CF_2CH_2CF_3$, $CF_3CHFCHFCF_2CF_3$, $CF_3CH_2CH_2CF_2CF_3$, $CH_3CHFCF_2CF_2CF_3$, $CF_3CF_2CF_2CH_2CH_3$, $CH_3CF_2CF_2CF_2CF_3$, $CF_3CH_2CHFCH_2CF_3$, $CH_2FCF_2CF_2CF_2CF_3$, $CHF_2CF_2CF_2CF_2CF_3$, $CH_3CF(CHFCHF_2)CF_3$, $CH_3CH(CF_2CF_3)CF_3$, $CHF_2CH(CHF_2)CF_2CF_3$, $CHF_2CF(CHF_2)CF_2CF_3$, $CHF_2CF_2CF(CF_3)_2$, $CHF_2(CF_2)_4CF_2H$, $(CF_3CH_2)_2CHCF_3$, $CH_3CHFCF_2CHFCHFCF_3$, $HCF_2CHFCF_2CF_2CHFCF_2H$, $H_2CFCF_2CF_2CF_2CF_2CF_2H$, $CHF_2CF_2CF_2CF_2CF_2CHF_2$, $CH_3CF(CF_2H)CHFCHFCF_3$, $CH_3CF(CF_3)CHFCHFCF_3$, $CH_3CF(CF_3)CF_2CF_2CF_3$, $CHF_2CF_2CH(CF_3)CF_2CF_3$, $CHF_2CF_2CF(CF_3)CF_2CF_3$, $CH_3CHFCH_2CF_2CHFCF_2CF_3$, $CH_3(CF_2)_5CH_3$, $CH_3CH_2(CF_2)_4CF_3$, $CF_3CH_2CH_2(CF_2)_3CF_3$,

$CH_2FCF_2CHF(CF_2)_3CF_3$, $CF_3CF_2CF_2CHFCHFCF_2CF_3$, $CF_3CF_2CF_2CHFCF_2CF_2CF_3$, $CH_3CH(CF_3)CF_2CF_2CF_2CH_3$, $CH_3CF(CF_3)CH_2CFHCF_2CF_3$, $CH_3CF(CF_2CF_3)CHFCF_2CF_3$, $CH_3CH_2CH(CF_3)CF_2CF_2CF_3$, $CHF_2CF(CF_3)(CF_2)_3CH_2F$, $CH_3CF_2C(CF_3)_2CF_2CH_3$, $CHF_2CF(CF_3)(CF_2)_3CF_3$; $CH_3CH_2CH_2CH_2CF_2CF_2CF_2CF_3$, $CH_3(CF_2)_3CH_3$, $CHF_2CF(CF_3)(CF_2)_4CHF_2$, $CHF_2CF(CF_3)(CF_2)_4CHF_2$, $CH_3CH_2CH(CF_3)CF_2CF_2CF_2CF_3$, $CH_3CF(CF_2CF_3)CHFCF_2CF_2CF_3$, $CH_3CH_2CH_2CHFC(CF_3)_2CF_3$, $CH_3C(CF_3)_2CF_2CF_2CF_2CH_3$, $CH_3CH_2CH_2CF(CF_3)CF(CF_3)_2$ and $CH_2FCF_2CF_2CHF(CF_2)_3CF_3$.

A preferred class of liquid fluorinated compounds particularly useful to form the liquid dispersion of the invention comprises hydrofluoroethers (HFEs) of the general formula $(R^1\text{-}O)_k\text{-}R^2$ (II) where, in reference to Formula (II), k is a number from 1 to 10, preferably from 1 to 3, $R^1$ and $R^2$ are the same or are different from one another and are selected from the group consisting of alkyl, aryl, and alkylaryl groups and their derivatives. At least one of $R^1$ and $R^2$ contains at least one fluorine atom, and preferably at least one of $R^1$ and $R^2$ contains at least one hydrogen atom. $R^1$ and $R^2$ may be linear, branched, cyclic or acyclic and optionally, one or both of $R^1$ and $R^2$ may contain one or more catenary heteroatoms, such as trivalent nitrogen or divalent oxygen. Preferably the number of fluorine atoms is equal to or greater than the number of hydrogen atoms, and more preferably the number of fluorine atoms is equal to or exceeds the sum of the number of combined numbers of hydrogen atoms and carbon-carbon bonds. $R^1$ or $R^2$ or both optionally may contain one or more chlorine atoms. The examples of such hydrofluoroethers include $HCF_2OCF_2OCF_2H$, $HCF_2OCF_2CF_2OCF_2H$, $HC_3F_6OCH_3$, $HCF_2OCF_2OC_2F_4OCF_2H$, and mixtures thereof.

More preferably, the liquid dispersion of the present invention contains fluorinated compound of the formula $R^3\text{-}O\text{-}R^4$ (III) wherein, $R^3$ and $R^4$ are selected from the group consisting of alkyl, aryl, and alkylaryl groups and their derivatives, wherein $R^3$ contains at least one fluorine atom, and $R^4$ may contain no fluorine atoms. More preferably, $R^4$ is an acyclic branched or straight chain alkyl group, such as methyl, ethyl, n-propyl, iso-propyl, n-butyl, i-butyl, or t-butyl, and $R^3$ is preferably a fluorinated derivative of a cyclic or acyclic, branched or straight chain alkyl group having from 3 to about 14 carbon atoms, such as n-$C_3F_7$, i-$C_3F_7$, n-$C_4F_9$, i-$C_4F_9$, n-$C_6F_{13}$, cyclo-$C_6F_{11}$, n-$C_7$F15, n-$C_8F_{17}$. $R^3$ may optionally contain one or more catenary heteroatoms, such as trivalent nitrogen or divalent oxygen atoms. Most preferably, $R^1$ and $R^2$, or $R^3$ and $R^4$, are chosen so that the fluorinated compound has at least three carbon atoms, and the total number of hydrogen atoms in the compound is at most equal to the number of fluorine atoms. Still more preferably, $R^1$ and $R^2$ or $R^3$ and $R^4$ are chosen so that the fluorinated compound has at least three carbon atoms, and the number of fluorine atoms is equal to or exceeds the sum of the number of combined hydrogen atoms and carbon-carbon bonds.

Particularly preferred liquid fluorinated compounds of formula (III) include n-$C_3F_7OCH_3$, $(CF_3)_2CFOCH_3$, n-$C_4F_9OCH_3$, $(CF_3)_2CFCF_2OCH_3$, n-$C_3F_7OC_2H_5$, n-$C_4F_9OC_2H_5$, $(CF_3)_2CFCF_2OC_2H_5$, $(CF_3)_3COCH_3$, $(CF_3)_3COC_2H_5$, n-$C_5F_{11}OC_2H_5$, n-$C_5F_{11}OCH_3$, n-$C_6F_{13}OC_2H_5$, n-$C_6F_{13}OCH_3$, n-$C_7F_{15}OC_2H_5$, n-$C_7F_{15}OCH_3$, n-$C_8F_{17}OC_2H_5$, n-$C_3F_{17}OCH_3$, and mixtures thereof.

Both $R^3$ and $R^4$ substituents in liquid fluorinated compounds of formula (III) may also contain fluorine atoms. The examples of such hydrofluoroethers include $C_4F_9OC_2F_4H$, $C_6F_{13}OCF_2H$, $HC_3F_6OC_3F_6H$, $C_3F_7OCH_2F$, and mixtures thereof.

Useful liquid fluorinated compounds also include hydrohalofluoroethers (HHFEs). For the present invention, HHFEs are defined as ether compounds containing fluorine, non fluorine halogen (i. e., chlorine, bromine, and/or iodine) and hydrogen atoms. An important subclass of HHFEs is perfluoroalkylhaloethers (PFAHEs). PFAHEs are defined as ether compounds having a perfluoroalkyl group and a haloalkyl group having carbon-bonded hydrogen atoms and halogen atoms, wherein at least one of the halogen atoms is chlorine, bromine, or iodine. Useful PFAHEs include those described by the general structure shown in Formula (IV) : $R_f\text{-}O\text{-}C_aH_bF_cX_d$ (IV) wherein $R_f$ is a perfluoroalkyl group preferably having at least about 3 carbon atoms, most preferably from 3 to 10 carbon atoms, and optionally containing a catenary heteroatom such as nitrogen or oxygen; X is a halogen atom selected from the group consisting of bromine, iodine, and chlorine; "a" preferably is from about 1 to 10 ;"b" is at least 1 ;"c" can range from 0 to about 2 ;"d" is at least 1 ; and b+c+d is equal to 2a+1. Such PFAHEs are described in PCT Publication No. WO 99/14175. Useful PFAHEs include c-$C_6F_{11}OCH_2Cl$, $(CF_3)_2CFOCHCl_2$, $(CF_3)_2CFOCH_2Cl$, $CF_3CF_2CF_2OCH_2Cl$, $CF_3CF_2CF_2OCHCl_2$, $(CF_3)_2CFCF_2OCHCl_2$, $(CF_3)_2CFCF_2OCH_2Cl$, $CF_3CF_2CF_2CF_2OCHCl_2$, $CF_3CF_2CF_2CF_2OCH_2Cl$, $(CF_3)_2CFCF_2OCHClCH_3$, $CF_3CF_2CF_2CF_2OCHClCH_3$, $(CF_3)_2CFCF(C_2F_5)OCH_2Cl$, $(CF_3)_2CFCF_2OCH_2Br$, and $CF_3CF_2CF_2OCH_2I$.

Useful fluorinated solvents also include hydrochlorofluorocarbons (HCFCs). For the present invention, HCFCs are defined as compounds containing a carbon backbone substituted with carbon-bound fluorine, chlorine, and hydrogen atoms. HCFCs useful in the present invention include $CF_3CHCl_2$, $CH_3CCl_2F$, $CF_3CF_2CHCl_2$ and $CClF_2CF_2CHClF$.

The liquid fluorinated compound used in the liquid dispersion of the present invention preferably has a molecular weight of up to 1000 g/mol, more preferably up to 800 g/mol, even more preferably up to 500 g/mol.

The liquid fluorinated compound suitable for the liquid dispersion according to the present invention preferably has a dynamic viscosity measured at a shear rate of 10 $s^{-1}$ and 25 °C of less than 2000 mPa*s, more preferably of less than 1000 mPa*s, even more preferably of less than 1000 mPa*s.

Inorganic particle

Inorganic particle contained in the liquid dispersion of the present invention is selected from the group consisting of aluminium oxide ($Al_2O_3$), aluminium nitride (AlN), silicon nitride ($Si_3N_4$), silicon carbide (SiC), tungsten disulphide ($WS_2$), and mixtures thereof.

In the case of $Al_2O_3$, it is preferable when the corresponding fumed metal oxide particles, i.e. the metal oxide particles obtained from pyrogenic processes, are employed. In such processes, metal compounds are reacted in a flame generated by the reaction of hydrogen and oxygen. The thus obtained powders are referred to as "pyrogenic" or "fumed" metal oxides. The reaction initially forms highly disperse primary particles, which in the further course of reaction coalesce to form aggregates. The aggregate dimensions of these powders are generally in the range of 0.2 - 1 $\mu$m. Said powders may be partially destructed and converted into the nanometre (nm) range particles advantageous for the present invention by suitable grinding.

It is also possible to employ other types of metal oxides, such as precipitated metal oxides or metal oxide sols, for example precipitated silica, precipitated alumina, precipitated titanium dioxide, silica sol, alumina sol or titanium dioxide sol.

AlN can be synthesized by the carbothermal reduction of aluminium oxide in the presence of gaseous nitrogen or ammonia or by direct nitridation of aluminium.

Silicon nitride ($Si_3N_4$) can be prepared by heating powdered silicon between 1300 °C and 1400 °C in a nitrogen environment, from silicon tetrachloride and ammonia by a diimide method or by carbothermal reduction of silicon dioxide in nitrogen atmosphere at 1400-1450 °C.

Silicon carbide (SiC) can be manufactured by thermal treatment of sand ($SiO_2$) in the presence of carbon at high temperature.

$WS_2$ can be produced by several synthetic methods involving treating tungsten oxides with sources of sulfide or hydrosulfide, directly supplied in this form or generated in situ. Other routes entail thermolysis of tungsten(VI) sulphides e.g., $(R_4N)_2WS_4$) or $WS_3$.

The inorganic particle preferably has a number median particle diameter $d_{50}$ of less than 10 $\mu$m, more preferably less than 2 $\mu$m, more preferably 20 nm - 1 $\mu$m, even more preferably 50 nm - 800 nm, still more preferably 100 nm - 700 nm. The number median particle diameter can be determined by dynamic light scattering method (DLS) directly in dispersion according to the present invention. The inorganic particles may be in the form of isolated individual particles and/or in the form of aggregated particles. In the case of aggregated particles, the number median particle diameter refers to the size of the aggregates.

Surface treatment agent

The inorganic particle present in the liquid dispersion according to the invention is surface treated. This surface treatment, particularly a hydrophobic surface treatment may improve the compatibility of inorganic particles with hydrophobic liquid fluorinated compounds.

Surface treated inorganic particles used in liquid dispersion of the present invention can be obtained by surface treatment of the corresponding untreated inorganic particles with surface treatment agents.

The inorganic particle is surface treated with a surface treatment agent selected from the group consisting of organosilanes, silazanes, acyclic or cyclic polysiloxanes and mixtures thereof.

One type of preferred organosilanes is an alkyl organosilane of the general formula

$$R'_x(RO)_ySi(C_nH_{2n+1}) \text{ (Va) and } R'_x(RO)_ySi(C_nH_{2n-1}) \qquad \text{(Vb)}$$

wherein

R = alkyl, such as, for example, methyl-, ethyl-, n-propyl-, i-propyl-, butyl-
R' = alkyl or cycloalkyl, such as, for example, methyl, ethyl, n-propyl, i-propyl, butyl, cyclohexyl, octyl, hexadecyl.
n = 1-20

$$x+y = 3$$

x = 0-2, and
y = 1-3.

Among alkyl organosilanes, particularly preferred are octyltrimethoxysilane, octyltriethoxysilane, hexadecyltrimethoxysilane, hexadecyltriethoxysilane.

Organosilanes used for surface treatment may contain halogens such as Cl or Br. Particularly preferred are the halogenated organosilanes of the following types:

- organosilanes of the general formula $X_3Si(C_nH_{2n+1})$ (VIa) and $X_3Si(C_nH_{2n-1})$ (VIb), wherein X = Cl, Br, n = 1 - 20;
- organosilanes of the general formula $X_2(R')Si(C_nH_{2n+1})$ (VIIa) and $X_2(R')Si(C_nH_{2n-1})$ (VIIb), wherein X = Cl, Br

  R' = alkyl, such as, for example, methyl, ethyl, n-propyl, i-propyl, butyl, cycloalkyl such as cyclohexyl
  n = 1 - 20;

- organosilanes of the general formula $X(R')_2Si(C_nH_{2n+1})$ (Villa) and

  $X(R')_2Si(C_nH_{2n-1})$ (VIIIb),

  wherein X = Cl, Br
  R' = alkyl, such as, for example, methyl, ethyl, n-propyl, i-propyl, butyl, cycloalkyl such as cyclohexyl

$$n = 1 – 20$$

Among halogenated organosilanes, particularly preferred is dimethyldichlorosilane.

The used organosilanes can also contain other than alkyl or halogen substituents, e.g. fluorine or some functional groups. Preferably used are functionalized organosilanes of the general formula $(R'')_x(RO)_ySi(CH_2)_mR'$ (IX), wherein

R" = alkyl, such as methyl, ethyl, propyl, or halogen such as Cl or Br,
R = alkyl, such as methyl, ethyl, propyl,

$$x+y = 3$$

x = 0-2,
y = 1-3,
m = 1-20,
R' = methyl-, aryl (for example, phenyl or substituted phenyl residues), heteroaryl $-C_4F_9$, $OCF_2-CHF-CF_3$, $-C_6F_{13}$, $-O-CF_2-CHF_2$, $-NH_2$, $-N_3$, -SCN, $-CH=CH_2$, $-NH-CH_2-CH_2-NH_2$, $-N-(CH_2-CH_2-NH_2)_2$, $-OOC(CH_3)C = CH_2$, $-OCH_2-CH(O)CH_2$, $-NH-CON-CO-(CH_2)_5-NH-COO-CH_3$, $-NH-COO-CH_2-CH_3$, $-NH-(CH_2)_3Si(OR)_3$, $-S_x-(CH_2)_3Si(OR)_3$, - SH, $-NR^1R^2R^3$ ($R^1$ = alkyl, aryl; $R^2$ = H, alkyl, aryl; $R^3$ = H, alkyl, aryl, benzyl, $C_2H_4NR^4R^5$ with $R^4$ = H, alkyl and $R^5$ = H, alkyl).

Among functionalized organosilanes, particularly preferred are 3-methacryloxypropyltrimethoxysilane, 3-methacryloxypropyltriethoxysilane, glycidyloxypropyltrimethoxysilane, glycidyloxypropyltriethoxysilane, aminopropyltriethoxysilane.

Particularly preferably, the surface treatment agent used for preparation of surface treated inorganic particles present in the liquid dispersion of the present invention is an organosilane containing fluorine atoms. The examples of such fluorinated organosilanes are nonafluorohexyltrimethoxysilane $[(CH_3O)_3SiC_6H_4F_9]$, tridecafluorooctyltrimethoxysilane $[(CH_3O)_3SiC_8H_4F_{13}]$, tridecafluorooctyltriethoxysilane $[(C_2H_5O)_3SiC_8H_4F_{13}]$.

Silazanes of the general formula $R'R_2Si-NH-SiR_2R'$ (X), wherein R = alkyl, such as methyl, ethyl, propyl; R' = alkyl, vinyl, are suitable as a surface treatment agent. The most preferred silazane is hexamethyldisilazane (HMDS).

Also suitable as surface treatment agents are cyclic polysiloxanes, such as octamethylcyclotetrasiloxane (D4), decamethylcyclopentasiloxane (D5), dodecamethylcyclohexasiloxane (D6), hexamethylcyclotrisiloxane (D6). Most preferably among cyclic polysiloxanes, D4 is used.

Another useful type of surface treatment agents is polysiloxanes or silicone oils of the general formula (XI):

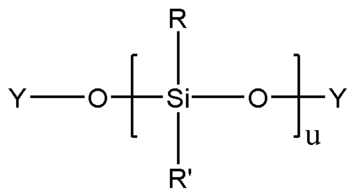

(XI),

wherein

Y = H, $CH_3$, $C_nH_{2n+1}$, wherein n=1-20, $Si(CH_3)_aX_b$,
wherein a = 2-3, b = 0 or1, a + b = 3,
X= H, OH, $OCH_3$, $C_mH_{2m+1,}$ wherein m=1-20.
R, R' = alkyl, such as $C_oH_{2o+1}$, wherein o = 1 to 20, aryl, such as phenyl and substituted phenyl residues, heteroaryl, $(CH_2)_k$-$NH_2$, wherein k = 1-10, H,
u = 2-1000, preferably u = 3-100.

Most preferably among polysiloxanes and silicone oils, polydimethylsiloxanes are used as surface treatment agents for preparation of liquid dispersions according to the present invention. Such polydimethylsiloxanes usually have a molar mass of 162 to 7500 g/mol, a density of 0.76 to 1.07 g/ml and viscosities of 0.6 to 1 000 000 mPa*s.

Liquid dispersion

The term "liquid" in the context of the present invention refers to a state of matter, which is liquid at 25 °C and pressure of 1 atm.

The liquid dispersion of the present invention preferably contains 1% to 30%, more preferably 2% to 25%, even more preferably 5% to 20% by weight of the inorganic particle and 70% to 99%, more preferably 75% to 98%, even more preferably 80% to 95% by weight of the liquid fluorinated compound.

The liquid dispersion according to the present invention may comprise other than inorganic particles and liquid fluorinated compounds.

The liquid dispersion according to the invention can contain any types of lubricant base oils, mineral, synthetic or natural, animal or vegetable oils suited for use as constituents of this liquid dispersion. The base oils used in liquid dispersion of the present invention include, for example, conventional base stocks selected from API (American Petroleum Institute) base stock categories known as Group I, Group II, Group III, Group IV and Group V. The Group I and II base stocks are mineral oil materials (such as paraffinic and naphthenic oils) having a viscosity index (or VI) of less than 120. Group I is further differentiated from Group II in that the latter contains greater than 90% saturated materials and the former contains less than 90% saturated material (that is more than 10% unsaturated material). Group III is considered the highest level of mineral base oil with a VI of greater than or equal to 120 and a saturates level greater than or equal to 90%. Preferably the base oil included in the liquid dispersion of the present invention is selected from the group consisting of API Group II and III base oils. Most preferably, the lubricant composition comprises an API Group III base oil. Group IV base oils are polyalphaolefins (PAO). Group V base oils are esters and any other base oils not included in Group I to IV base oils. These base oils can be used individually or as a mixture.

The liquid dispersion according to the present invention may comprise organic solvents. Possible organic solvents include hydrocarbon solvents, for example aromatic solvents such as toluene, benzene and xylene, saturated hydrocarbons, for example cyclohexane, heptane, octane, nonane, decane, dodecane, which may be present in linear or branched form. These solvents may be used individually and as a mixture.

The liquid dispersion of the present invention may also comprise any type of additives suitable for use in the formulations. These additives include viscosity index improvers (like PAMA, OCP, PIB), pour point depressants, dispersants (like succinimides), demulsifiers, defoamers, anti-wear additives (like ZDDPs, phosphates, dithiophosphates, dithiocabamates), extreme pressure additives (like sulphurized i-butenes, di-i-butens fatty acid esters, or thiadiazoles), lubricity additives, friction modifiers (like alkyldimethylphosphonates, glycerinmono-oleate, bis(2-hydroxyethyl)alkyllamines, phenolic or aminic antioxidants, detergents (like sulfonates, phenates), dyes, corrosion inhibitors (like succinic partial ester), yellow metal deactivator (like triazoles) and/or odourants.

The liquid dispersion according to the present invention preferably possess a relatively low viscosity. Thus, dynamic viscosity of the liquid dispersion of the invention measured at a shear rate of 10 $s^{-1}$ and 25 °C, is preferably less than 10 000 mPa*s, more preferably less than 5 000 mPa*s, most preferably less than 1 000 mPa*s, particularly preferably less than 500 mPa*s. Dynamic viscosity can be measured with a viscometer or rheometer.

The presence of thermally conductive inorganic particles in the liquid dispersion of the present invention leads

to increased thermal conductivity of this dispersion. Therefore, the liquid dispersion of the present invention typically has a relatively high thermal conductivity, when compared with its liquid components, including the liquid fluorinated compound. Thus, thermal conductivity of the liquid dispersion is preferably at least 20 %, more preferably, at least 30%, even more preferably 40%, still more preferably 50% larger than thermal conductivity of the liquid fluorinated compound or the mixture of such compounds present in the dispersion.

Thermal conductivity of the liquid dispersion according to the present invention is preferably at least 0.06 W/m*K, more preferably at least 0.07 W/m*K, even more preferably at least 0.08 W/m*K, still even more preferably at least 0.09 W/m*K.

Thermal diffusion of the liquid dispersion of the present invention is preferably at least 0.04 $mm^2$/sec, more preferably at least 0.05 $mm^2$/sec, even more preferably at least 0.06 $mm^2$/sec, still more preferably from 0.06 $mm^2$/sec to 0.12 $mm^2$/sec.

Specific heat of the liquid dispersion of the present invention is preferably less than 2.0 MJ/($m^3$*K), more preferably less than 1.9 MJ/($m^3$*K), even more preferably less than 1.8 MJ/($m^3$*K), still more preferably less than 1.7 MJ/($m^3$*K), most preferably from 1.0 MJ/($m^3$*K) to 1.7 MJ/($m^3$*K),

Thermal conductivity, thermal diffusion and specific heat of the liquid dispersion of the present invention can be measured at ambient temperature, e.g. 23 °C by a hot disc method using a hot disc thermal analyser, such as TPS 3500 (manufacturer Hot Disc AB).

<u>The process for obtaining the liquid dispersion</u>

The invention provides process for producing the liquid dispersion of the present invention, comprising the following steps:

(i) providing an inorganic particle selected from the group consisting of $Al_2O_3$, AIN, $Si_3N_4$, SiC, $WS_2$, and mixtures thereof surface treated with a surface treatment agent selected from the group consisting of organosilanes, silazanes, acyclic or cyclic polysiloxanes and mixtures thereof;
(ii) mixing the inorganic particle with at least one liquid fluorinated compound;
(iii) optional milling of the resulting dispersion prepared in step (ii) using a high shear energy milling device.

Step (i) of the inventive process is preferably carried out by treating of surface untreated inorganic particle selected from the group consisting of $Al_2O_3$, AIN, $Si_3N_4$, SiC, $WS_2$, and mixtures thereof with a surface treatment agent selected from the group consisting of organosilanes, silazanes, acyclic or cyclic polysiloxanes and mixtures thereof.

In this step (i), the untreated inorganic particle is preferably sprayed with a surface treatment agent selected from the group consisting of organosilanes, silazanes, acyclic or cyclic polysiloxanes and mixtures thereof, at ambient temperature (about 25 °C) and the mixture is subsequently treated thermally at a temperature of 50 °C to 400 °C over a period of 1 to 6 hours.

An alternative method for surface treatment of the inorganic particle in step (i) can be carried out by treating the inorganic particle with a surface treatment agent in vapour form and subsequently treating the mixture thermally at a temperature of 50°C to 800 °C over a period of 0.5 to 6 hours.

The thermal treatment can be conducted under protective gas, such as, for example, nitrogen. The surface treatment can be carried out in heatable mixers and dryers with spraying devices, either continuously or batchwise. Suitable devices can be, for example, ploughshare mixers or plate, cyclone, or fluidized bed dryers.

The amount of surface treatment agent used strongly depend on the kind of the inorganic particle and of the surface treatment agent applied. However, usually from 1% to 15 %, preferably 2% - 10% by weight of the surface treatment agent related to the amount of the inorganic particles, is employed.

Mixing the inorganic particle with at least one fluorinated hydrocarbon in step (ii) of the process according to the invention can be carried out using any suitable mixing device, such as a dissolver. Preferably, the mixture of the inorganic particles and the liquid fluorinated compound is stirred at a rotating speed of at least 10 rotations per minute (rpm), more preferably at a speed of at least 100 rpm. Preferably, step (ii) is carried out at ambient temperature, e.g. 25 °C.

In optional step (iii) of the inventive process, the resulting dispersion prepared in step (ii) of the process is milled using a high shear energy milling device.

High shear milling device used in the process according to the invention can supply enough energy to provide inventive dispersions with a number mean particle size $d_{50}$ of less than 5 $\mu$m, more preferably with $d_{50}$ of less than 1 $\mu$m, more preferably with $d_{50}$ of less than 800 nm. During this milling process, the larger particles such as agglomerates or aggregates may be broken to smaller particles resulting in overall decrease in particle size. Preferably, the milling device operating with the dispersion will supply about $10^{-4}$ cal/$cm^2$ or more, more preferably from $10^{-4}$ to $10^{-3}$ cal/$cm^2$ energy while milling.

Such high shear milling device can be selected from planetary and blade-type mixers, homogenizers, rotor-stator machines, media mills, jet mills, wet jet mills. Preferably, step (iii) is carried out using a wet jet mill. In this case, the pressure in the milling chamber is preferably at least 500 bar, more preferably at least 800 bar, even more preferably 1000 bar.

Step (iii) of the inventive process may be unnecessary.

The use of the liquid dispersion

The invention further provides the use of the liquid dispersion according to the invention as a constituent of oil lubricant, such as a transmission fluid, an engine oil, a gear oil, a hydraulic oil, a lubricating grease, heat transfer fluids in battery systems or other electrical equipment.

Particularly, the invention provides the use of the liquid dispersion of the invention for increasing thermal conductivity of oil lubricants and/or heat transfer fluids.

The liquid dispersion of the present invention may be a constituent of a heat transfer fluid, especially for electrical equipment. Such heat transfer fluids, particularly cooling liquids should have a high specific heat capacity and should in particular be suitable for use in thermal management systems for high power batteries. The inventive dispersion may be used in heat transfer fluid for electrical equipment like electric batteries, electric motors, electric transformers, electric power converters, electric capacitors, fluid-filled transmission lines, fluid-filled power cables, and computers. The examples of such heat transfer fluids are given in patent applications WO 2013115925 A1 and WO 2014106556 A1.

## Experimental Part

### Measurement methods

*Thermal conductivity, Thermal diffusion, Specific heat*

Thermal conductivity, *thermal diffusion and specific heat* were measured at 23 °C by hot disk method, using a hot disc thermal analyser TPS 3500 (manufacturer Hot Disc AB) with a measurement sensor of type 7577.

*Viscosity*

Dynamic viscosity was measured with a rheometer MCR 301 (manufacturer: Anton Paar).

*Particle Size*

The average particle size $d_{50}$ of inorganic particles was measured by dynamic light scattering method using Zetasizer device (manufacturer: Malvern Panalytical).

### Preparation of surface treated $Al_2O_3$

A 50 wt% solution of tridecafluorooctyl triethoxysilane (Dynasylan® F8261, manufacturer: Evonik Resource Efficiency GmbH) in isopropyl alcohol was sprayed at ambient temperature (23 °C) on untreated AEROXIDEO Alu 65 (hydrophilic fumed $Al_2O_3$, BET = ca. 65 $m^2/g$, manufacturer: Evonik Resource Efficiency GmbH) in powder form using a spraying device. The amount of the used silane was 3 wt%, related to the amount of $Al_2O_3$ powder used. Surface treated $Al_2O_3$ was dried at 60 °C in an air circulation oven for 3 hours and used for preparation of dispersions without any further treatment.

### Preparation of surface treated AIN

A 50 wt% solution of tridecafluorooctyl triethoxysilane (Dynasylan® F8261, manufacturer: Evonik Resource Efficiency GmbH) in isopropyl alcohol was sprayed at ambient temperature (23 °C) on untreated aluminium nitride (AIN, average particle size: 80 nm) in powder form using a spraying device. The amount of the used silane was 3 wt%, related to the amount of AIN powder used. Surface treated AIN was dried at 60 °C in an air circulation oven for 3 hours and used for preparation of dispersions without any further treatment.

**Preparation of liquid dispersions**

**Dispersion 1 (comparative example)**

Surface untreated AlN powder was mixed with hydrofluorether $C_7F_{15}OC_2H_5$ (Novec™ 7500, manufacturer: 3M) while stirring using DISPERMAT® dissolver (manufacturer: VMA-Getzmann GmbH). The amount of AlN was 5 wt%, related to the amount of the fluorinated liquid used. The mixed liquid was then milled in a wet jet mill JN20 (manufacturer: JOKOH) at 1200 bar pressure in milling chamber. After milling, the liquid dispersion can be diluted without any phase changes. The dispersion was stable upon storage at 25 °C for at least several weeks. After dispersion, particle size distribution, viscosity and thermal conductivity were measured, the results are summarized in Table 1.

**Dispersion 2 (inventive)**

The prepared surface treated AlN powder was mixed with hydrofluorether $C_7F_{15}OC_2H_5$ (Novec™ 7500, manufacturer: 3M) while stirring using DISPERMAT® dissolver (manufacturer: VMA-Getzmann GmbH). The amount of AlN was 5 wt%, related to the amount of the fluorinated liquid used. The dispersion possessed low viscosity and no further milling was required. The dispersion was stable upon storage at 25 °C for at least several weeks. Particle size distribution, viscosity and thermal conductivity of the resulting dispersion were measured, the results are summarized in Table 1.

**Dispersion 3 (inventive)**

The prepared surface treated $Al_2O_3$ powder was mixed with hydrofluorether $C_7F_{15}OC_2H_5$ (Novec™ 7500, manufacturer: 3M) while stirring using DISPERMAT® dissolver (manufacturer: VMA-Getzmann GmbH). The amount of surface treated $Al_2O_3$ was 5 wt%, related to the amount of the fluorinated liquid used. The dispersion possessed low viscosity and no further milling was required. The dispersion was stable upon storage at 25 °C for at least several weeks. Particle size distribution, viscosity and thermal conductivity of the resulting dispersion were measured, the results are summarized in Table 1.

As it can be seen from the Table 1, liquid dispersions 1-3 containing thermally conductive fillers and a fluorinated liquid $C_7F_{15}OC_2H_5$ show considerably higher thermal conductivities when compared with the pure fluorinated liquid (an increase of more than 50% in all cases). The dynamic viscosity of such dispersions remains relatively low. The use of surface treated inorganic particles (dispersions 2 and 3) allow to improve the compatibility of particles with the fluorinated fluid. Therefore, no high energy milling is required in order to achieve low viscosity dispersions 1 and 2.

**Table 1**

| Fluid or Dispersion | Inorganic Particle | Surface Treatment | Thermal conductivity [W/m*K] | Dynamic viscosity at 10 $s^{-1}$ [mPa*s] | Particle size, $d_{50}$ [$\mu$m] | Thermal diffusion [mm2/sec] | Specific heat [MJ/ ($m^3$*K)] |
|---|---|---|---|---|---|---|---|
| $C_7F_{15}OC_2H_5$ (pure) | No | No | 0.05942 | 1 | - | 0.02753 | 2.158 |
| 1 | AlN | No | 0.08956 | 100 | 7.90 | 0.04939 | 1.813 |
| 2 | AlN | Dynasylan® F8261 | 0.09927 | 20 | 0.60 | 0.06098 | 1.628 |
| 3 | $Al_2O_3$ | Dynasylan® F8261 | 0.1023 | 15 | 0.59 | 0.08161 | 1.254 |

## Claims

1. Liquid dispersion containing inorganic particle selected from the group consisting of $Al_2O_3$, AlN, $Si_3N_4$, SiC, $WS_2$ and mixtures thereof and at least one liquid fluorinated compound, wherein the inorganic particle is surface treated with a surface treatment agent selected from the group consisting of organosilanes, silazanes, acyclic or cyclic polysiloxanes and mixtures thereof.

2. The liquid dispersion according to claim 1,

**characterized in that**
dynamic viscosity of the dispersion measured at a shear rate of 10 $s^{-1}$ and 25 °C, is less than 10 000 mPa*s.

3. The liquid dispersion according to either of claims 1 to 2,
**characterized in that**
thermal conductivity of the dispersion is at least 0.06 W/m*K.

4. The liquid dispersion according to either of claims 1 to 3,
**characterized in that**
thermal conductivity of the dispersion is at least 20 % larger than thermal conductivity of the liquid fluorinated compound or the mixture of such compounds present in the dispersion.

5. The liquid dispersion according to either of claims 1 to 4,
**characterized in that**
the dispersion contains 1% to 30 % by weight of the inorganic particle and 70% to 99 % by weight of the liquid fluorinated compound.

6. The liquid dispersion according to either of claims 1 to 5,
**characterized in that**
the surface treatment agent is an organosilane containing fluorine atoms.

7. The liquid dispersion according to either of claims 1 to 6,
**characterized in that**
the liquid fluorinated compound is selected from the group consisting of hydrofluoroethers, hydrofluorocarbons, hydrohalofluoroethers and hydrochlorofluorocarbons and mixtures thereof.

8. The liquid dispersion according to either of claims 1 to 7,
**characterized in that**
the liquid fluorinated compound has a dynamic viscosity measured at a shear rate of 10 $s^{-1}$ and 25 °C of less than 2000 mPa*s.

9. The liquid dispersion according to either of claims 1 to 8,
**characterized in that**
the inorganic particle has a mean particle size $d_{50}$ of less than 10 $\mu$m.

10. The liquid dispersion according to either of claims 1 to 9,
**characterized in that**
the liquid dispersion has thermal diffusion of at least 0.04 $mm^2$/sec and specific heat of less than 2.0 MJ/($m^3$*K).

11. Process for producing the liquid dispersion as defined in either of claims 1 to 10, comprising the following steps:

    (i) providing an inorganic particle selected from the group consisting of $Al_2O_3$, AlN, $Si_3N_4$, SiC, $WS_2$, $TiO_2$ and mixtures thereof, surface treated with a surface treatment agent selected from the group consisting of organosilanes, silazanes, acyclic or cyclic polysiloxanes and mixtures thereof;
    (ii) mixing the inorganic particle with at least one liquid fluorinated compound;
    (iii) optional milling of the resulting dispersion prepared in step (ii) using a high shear energy milling device.

12. The process according to claim 11,
**characterized in that** the high shear milling device is selected from planetary and blade-type mixers, homogenizers, rotor-stator machines, media mills, jet mills, wet jet mills.

13. Use of the liquid dispersion according to one of claims 1 to 10 as a constituent of oil lubricant, such as a transmission fluid, an engine oil, a gear oil, a hydraulic oil, a lubricating grease, heat transfer fluids in battery systems or other electrical equipment.

14. Use of the liquid dispersion according to one of claims 1 to 10 for increasing thermal conductivity of oil lubricants and/or heat transfer fluids.

## Patentansprüche

1. Flüssige Dispersion, die anorganisches Partikel ausgewählt aus der Gruppe bestehend aus $Al_2O_3$, AlN, $Si_3N_4$, SiC, $WS_2$ und Mischungen davon und mindestens eine flüssige fluorierte Verbindung enthält, wobei das anorganische Partikel mit einem Oberflächenbehandlungsmittel ausgewählt aus der Gruppe bestehend aus Organosilanen, Silazanen, acyclischen oder cyclischen Polysiloxanen und Mischungen davon oberflächenbehandelt ist.

2. Flüssige Dispersion nach Anspruch 1, **dadurch gekennzeichnet, dass** die dynamische Viskosität der Dispersion, gemessen mit einer Scherrate von 10 $s^{-1}$ und bei 25 °C, kleiner als 10 000 mPa*s ist.

3. Flüssige Dispersion nach einem der Ansprüche 1 bis 2, **dadurch gekennzeichnet, dass** die Wärmeleitfähigkeit der Dispersion mindestens 0,06 W/m*K beträgt.

4. Flüssige Dispersion nach einem der Ansprüche 1 bis 3, **dadurch gekennzeichnet, dass** die Wärmeleitfähigkeit der Dispersion mindestens 20 % größer als die Wärmeleitfähigkeit der flüssigen fluorierten Verbindung oder der Mischung derartiger Verbindungen ist, die in der Dispersion vorhanden ist.

5. Flüssige Dispersion nach einem der Ansprüche 1 bis 4, **dadurch gekennzeichnet, dass** die Dispersion 1 Gew.% bis 30 Gew.% des anorganischen Partikels und 70 Gew.% bis 99 Gew.% der flüssigen fluorierten Verbindung enthält.

6. Flüssige Dispersion nach einem der Ansprüche 1 bis 5, **dadurch gekennzeichnet, dass** das Oberflächenbehandlungsmittel ein Organosilan ist, das Fluoratome enthält.

7. Flüssige Dispersion nach einem der Ansprüche 1 bis 6, **dadurch gekennzeichnet, dass** die flüssige fluorierte Verbindung ausgewählt ist aus der Gruppe bestehend aus Hydrofluorethern, Hydrofluorkohlenstoffen, Hydrohalogenfluorethern und Hydrochlorfluorkohlenstoffen und Mischungen davon.

8. Flüssige Dispersion nach einem der Ansprüche 1 bis 7, **dadurch gekennzeichnet, dass** die flüssige fluorierte Verbindung eine dynamische Viskosität, gemessen mit einer Scherrate von 10 $s^{-1}$ und bei 25 °C, von weniger als 2000 mPa*s hat.

9. Flüssige Dispersion nach einem der Ansprüche 1 bis 8, **dadurch gekennzeichnet, dass** das anorganische Partikel eine mittlere Partikelgröße $d_{50}$ von weniger als 10 $\mu$m aufweist.

10. Flüssige Dispersion nach einem der Ansprüche 1 bis 9, **dadurch gekennzeichnet, dass** die flüssige Dispersion eine thermische Diffusion von mindestens 0,04 $mm^2$/s und spezifische Wärme von weniger als 2,0 MJ/($m^3$*K) aufweist.

11. Verfahren zur Herstellung der flüssigen Dispersion, wie in einem der Ansprüche 1 bis 10 definiert, umfassend die folgenden Schritte:

    (i) Bereitstellen eines anorganischen Partikels ausgewählt aus der Gruppe bestehend aus $Al_2O_3$, AlN, $Si_3N_4$, SiC, $WS_2$, $TiO_2$ und Mischungen davon, das mit einem Oberflächenbehandlungsmittel ausgewählt aus der Gruppe bestehend aus Organosilanen, Silazanen, acyclischen oder cyclischen Polysiloxanen und Mischungen davon oberflächenbehandelt ist;
    (ii) Mischen des anorganischen Partikels mit mindestens einer flüssigen fluorierten Verbindung;
    (iii) gegebenenfalls Mahlen der resultierenden Dispersion, die in Schritt (ii) hergestellt wurde, unter Verwendung einer Mahlvorrichtung mit hoher Scherenergie.

12. Verfahren nach Anspruch 11, **dadurch gekennzeichnet, dass** die Mahlvorrichtung mit hoher Scherung ausgewählt ist aus Planetenmischern und Mischern vom Schaufeltyp, Homogenisierern, Rotor-Stator-Maschinen, Mahlkörpermühlen, Strahlmühlen, Nassstrahlmühlen.

13. Verwendung der flüssigen Dispersion nach einem der Ansprüche 1 bis 10 als Bestandteil von Ölschmiermittel, wie als Getriebeflüssigkeit, Motoröl, Getriebeöl, Hydrauliköl, Schmierfett, Wärmeübertragungsfluide in Batteriesystemen oder anderen Elektrogerätschaften.

14. Verwendung der flüssigen Dispersion nach einem der Ansprüche 1 bis 10 zur Erhöhung der Wärmeleitfähigkeit von

Ölschmierstoffen und/oder Wärmeübertragungsfluiden.

**Revendications**

1. Dispersion liquide contenant une particule inorganique choisie dans le groupe constitué par $Al_2O_3$, AlN, $Si_3N_4$, SiC, $WS_2$ et des mélanges correspondants et au moins un composé fluoré liquide, la particule inorganique étant traitée en surface par un agent de traitement de surface choisi dans le groupe constitué par des organosilanes, des silazanes, des polysiloxanes acycliques ou cycliques et des mélanges correspondants.

2. Dispersion liquide selon la revendication 1, **caractérisée en ce que** la viscosité dynamique de la dispersion mesurée à une vitesse de cisaillement de 10 $s^{-1}$ et à 25 °C, est inférieure à 10 000 mPa*s.

3. Dispersion liquide selon l'une ou l'autre des revendications 1 et 2, **caractérisée en ce que** la conductivité thermique de la dispersion est d'au moins 0,06 W/m*K.

4. Dispersion liquide selon l'une ou l'autre des revendications 1 à 3, **caractérisée en ce que** la conductivité thermique de la dispersion est au moins 20 % plus grande que la conductivité thermique du composé fluoré liquide ou du mélange de tels composés présents dans la dispersion.

5. Dispersion liquide selon l'une ou l'autre des revendications 1 à 4, **caractérisée en ce que** la dispersion contient 1 % à 30 % en poids de la particule inorganique et 70 % à 99 % en poids du composé fluoré liquide.

6. Dispersion liquide selon l'une ou l'autre des revendications 1 à 5, **caractérisée en ce que** l'agent de traitement de surface est un organosilane contenant des atomes de fluor.

7. Dispersion liquide selon l'une ou l'autre des revendications 1 à 6, **caractérisée en ce que** le composé fluoré liquide est choisi dans le groupe constitué par des hydrofluoroéthers, des hydrofluorocarbures, des hydrohalogénofluoroéthers et des hydrochlorofluorocarbures et des mélanges correspondants.

8. Dispersion liquide selon l'une ou l'autre des revendications 1 à 7, **caractérisée en ce que** le composé fluoré liquide possède une viscosité dynamique mesurée à une vitesse de cisaillement de 10 $s^{-1}$ et à 25 °C inférieure à 2 000 mPa*s.

9. Dispersion liquide selon l'une ou l'autre des revendications 1 à 8, **caractérisée en ce que** la particule inorganique possède une taille moyenne de particule $d_{50}$ de moins de 10 $\mu$m.

10. Dispersion liquide selon l'une ou l'autre des revendications 1 à 9, **caractérisée en ce que** la dispersion liquide possède une diffusion thermique d'au moins 0,04 $mm^2$/s et une chaleur spécifique de moins de 2,0 MJ/($m^3$*K) .

11. Procédé pour la production de la dispersion liquide telle que définie dans l'une ou l'autre des revendications 1 à 10, comprenant les étapes suivantes :

    (i) mise à disposition d'une particule inorganique choisie dans le groupe constitué par $Al_2O_3$, AlN, $Si_3N_4$, SiC, $WS_2$, $TiO_2$ et des mélanges correspondants, traitée en surface par un agent de traitement de surface choisi dans le groupe constitué par des organosilanes, des silazanes, des polysiloxanes acycliques ou cycliques et des mélanges correspondants ;
    (ii) mélange de la particule inorganique avec au moins un composé fluoré liquide ;
    (iii) éventuellement broyage de la dispersion résultante préparée dans l'étape (ii) en utilisant un dispositif de broyage à énergie de cisaillement élevée.

12. Procédé selon la revendication 11, **caractérisé en ce que** le dispositif de broyage à cisaillement élevé est choisi parmi des mélangeurs planétaires et de type à lame, des homogénéisateurs, des machines à rotor-stator, des broyeurs à fluide, des broyeurs à jet, des broyeurs à jet humide.

13. Utilisation de la dispersion liquide selon l'une des revendications 1 à 10 en tant que constituant d'un lubrifiant à huile, tel qu'un fluide de transmission, une huile de moteur, une huile d'engrenage, une huile hydraulique, une graisse lubrifiante, des fluides de transfert de chaleur dans des systèmes de batterie ou un autre appareil électrique.

**14.** Utilisation de la dispersion liquide selon l'une des revendications 1 à 10 pour l'augmentation de la conductivité thermique de lubrifiants à huile et/ou de fluides de transfert de chaleur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 102924924 A
- CN 108440968 A
- US 2975220 A
- WO 0175955 A
- GB 2557759 A
- US 2010187469 A
- WO 9914175 A
- WO 2013115925 A1
- WO 2014106556 A1

### Non-patent literature cited in the description

- **L. ZEININGER et al.** *Chemistry Open,* 2018, vol. 7, 282-287
- **A.A.M. REDHWAN et al.** international communications in heat and mass transfer. Pergamon, 2016, vol. 76, 285-293